(19) Europäisches Patentamt / European Patent Office / Office européen des brevets

(11) **EP 4 027 686 A1**

(12) **EUROPEAN PATENT APPLICATION**

(43) Date of publication:
**13.07.2022 Bulletin 2022/28**

(21) Application number: **21199744.0**

(22) Date of filing: **29.09.2021**

(51) International Patent Classification (IPC):
**H04W 24/02** (2009.01)    **H01Q 3/00** (2006.01)

(52) Cooperative Patent Classification (CPC):
**H04W 24/02**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.01.2021 IN 202111000546**

(71) Applicant: **Sterlite Technologies Limited Haryana 122002 (IN)**

(72) Inventors:
• **KUMAR, Nitesh**
  122002 Haryana (IN)
• **JAMWAL, Manish**
  122002 Haryana (IN)
• **KUMAR, Sudhanshu**
  122002 Haryana (IN)
• **SUBRAMANIAN, Nishayvithaa**
  122002 Haryana (IN)

(74) Representative: **Hepworth Browne 15 St. Pauls Street Leeds LS1 2JG (GB)**

(54) **METHOD AND APPARATUS FOR REMOTE SENSING OF ANTENNA CONFIGURATION PARAMETERS**

(57)    The present disclosure provides a method and an apparatus for real-time remote sensing of a plurality of antenna configuration parameters in a radio access network (RAN) configured with the radio unit (202) includes receiving the plurality of antenna configuration parameters by the sensor module (102) from the antenna, transmitting the received plurality of antenna configuration parameters from the sensor module (102) to a plurality of hardware devices (106) using a programmable interface (104) on the radio unit.

300

Receiving a plurality of antenna configuration parameters by a sensor module from an antenna — 302

Transmitting the received plurality of antenna configuration parameters from the sensor module to a plurality of hardware devices using an interface — 304

FIG. 3

EP 4 027 686 A1

## Description

### TECHNICAL FIELD

Embodiments of the present disclosure relate to the field sensing technology. And more particularly, relates to a method and apparatus for remote sensing of antenna configuration parameters.

This application claims the benefit of Indian Application No. 202111000546 titled "Method and Apparatus for Remote Sensing of Antenna Configuration Parameters" filed by the applicant on 6/01/2021, which is incorporated herein by reference in its entirety.

### Background Art

Of late, an accurate site physical location and installation information such as, but not limited to, latitude, longitude, height, mechanical tilt, azimuth of an antenna system has been a challenge for operators. While accuracy of such information is very useful for the operators to make key planning decisions of a network on operating expenses (Opex) and capital expenditures (Capex), the process of finding such information is manual and physical site surveys are required to gather such information.

The operators are spending millions of dollars in the information gathering projects to get the accurate data and still there is no surety whether the data collected is relevant, as it needs human intervention to get parameters captured that are prone to error.

In the current scenario, every operator follows set up activities for conducting the physical surveys such as manual site survey using external global positioning system (GPS), tilt meters, height laser meters and compass; external sensor module on passive antenna system with proprietary interfaces to capture data or the like.

Although there have been several advancements made to create an integrated module to capture all the information of the antenna system, since an antenna is a passive element, putting an active sensor on the antenna makes it a non-feasible and non-viable solution.

A Chinese Patent Application "CN201629398U" discloses an integrated antenna with a remote radio frequency unit (RRU), which comprises the remote radio frequency unit (RRU) and an antenna part arranged on and tightly combined with the remote radio frequency unit, wherein the antenna part comprises an antenna base plate arranged on the remote radio frequency unit (RRU), an upper cover matched with the base plate, a reflecting plate arranged between the base plate and the upper cover, a vibrator arranged on the reflecting plate and a radio frequency connector electrically connected with the vibrator. Particularly, the integrated antenna adopts an integrated design, and the overall appearance of the integrated antenna is that the antenna part is integrated with the remote radio frequency unit (RRU), thus guaranteeing the concealed property and attractive appearance of the integrated antenna; the antenna part and the remote radio frequency unit (RRU) are integrated together, the core wire used for connecting the remote radio frequency unit (RRU) with the antenna can be designed to be short, thus being capable of improving the transmission efficiency; in addition, by the integrated design, the requirement of later network supplement can be met in one network construction, and the antenna can be installed extremely and conveniently without a supporting part for foundation construction.

Another WIPO Patent Application "WO2016088126A1" discloses a method for tuning an antenna assembly. The antenna assembly comprises a main reflector, a sub-reflector and a feed, the sub-reflector is provided with a plurality of actuators adapted to locally deform the curvature of the sub-reflector in response to an activation signal, the method comprising deploying a plurality of transmission sensors at a target area of the transmission illumination the antenna assembly, activating transmission from the antenna assembly, measuring and recording level of transmission power at each of the plurality of sensors along with the location of the respective sensor, extracting actual antenna assembly illumination footprint map from the recorded values, comparing the extracted illumination footprint map to a desired footprint, and providing activation signals to at least some of the actuators to deform the curvature of the sub- reflector so that the footprint of the illumination by the antenna assembly at the target area matches the desired footprint.

Further, another Chinese Patent Application "CN102820893A" discloses an integrated modularized system including an RRU (remote radio unit) and an antenna, and a mobile communication base station, belonging to the communication technology. The integrated modularized system comprises a main control module for active control; at least one active radiation module connected with the main control module, and a radiator arranged between the main control module and the active radiation module, wherein the active radiation module includes an antenna oscillator, an antenna filter, and a transceiving unit. The antenna filter, the transceiving unit and the antenna oscillator in the RRU can be integrally arranged in the active radiation module by arranging the main control module for active control in the RRU independently, so that the RRU can be completely integrated with the smart antenna, thereby obviating feeder connection between the antenna and the active equipment and further obviating feeder loss. The integrated modularized system provided by the disclosure is convenient in installation, and is improved in reliability by arranging the antenna, the oscillator, the filter and a power amplifier in the active radiation module.

There is an urgent need for a technical solution that overcomes the above stated limitations in the prior arts. Thus, to address above constraints and limitations, the present disclosure focuses on a method and an apparatus for remote sensing of antenna configuration parameters more accurately.

Any references to methods, apparatus or documents of the prior art are not to be taken as constituting any evidence or admission that they formed, or form part of the common general knowledge.

## SUMMARY OF THE DISCLOSURE

Embodiments of the present disclosure provide a method for providing remote sensing of a one or more antenna configuration parameters without any need for physical audit. In particular, the method uses a single box integrated sensor system (i.e., a sensor module) in a radio unit (RU) that is installed at a back panel of an antenna. And, one or more antenna configuration parameters comprising one or more sensor data values corresponding to an antenna.

According to the first aspect of the disclosure, the method comprises steps of receiving one or more antenna configuration parameters by a sensor module from the antenna, the sensor module comprises a plurality of sensors and is a part of a radio unit (RU), the RU is integrated with the antenna; and transmitting the received one or more antenna configuration parameters from the sensor module to a plurality of hardware devices using a programmable interface on the radio unit.

According to the second aspect of the disclosure, the sensor module includes a plurality of sensors such as, but not limited to, a global positioning system (GPS) module, a compass, an accelerometer, a gyroscope, an inclinometer and an altimeter. The GPS module measures location parameters, the compass is used for capturing azimuth/orientation parameters, the accelerometer is used for capturing vibration parameters, the gyroscope captures yaw measurement, the inclinometer measures tilt parameters and the altimeter senses parameters related to height of the antenna system. The sensor module has a matching interface with the antenna and captures data using above-mentioned different sensors for accurate antenna configuration.

In accordance with an embodiment of the present disclosure, the plurality of hardware devices further includes at least one of: remote management system (RMS), network management system (NMS), operations support system (OSS) and distributed unit (DU).

In accordance with an embodiment of the present disclosure, the plurality of hardware devices corresponds to different vendors.

In accordance with an embodiment of the present disclosure, the method further includes mapping of one or more antenna configuration parameters with a plurality of management information bases corresponding to the plurality of hardware devices.

In accordance with another embodiment of the present disclosure, the method includes monitoring the received one or more antenna configuration parameters from the sensor module by the plurality of hardware devices in a predetermined time interval.

In accordance with yet another embodiment of the present disclosure, the method includes the step of providing one or more antenna configuration parameters to the plurality of hardware devices continuously in real-time.

In accordance with yet another embodiment of the present disclosure, the method includes transmitting one or more antenna configuration parameters to the plurality of hardware devices after every first time interval.

According to the third aspect of the disclosure, the method includes storing one or more antenna configuration parameters in a YANG data module within the programmable interface. In particular, the programmable interface is compliant to an open radio access network (O-RAN) architecture system, the O-RAN architecture system includes a non-real-time RAN controller, a near-real-time RAN controller, a plurality of components, the plurality of components is at least one of: disaggregated, reprogrammable and vendor independent, the near-real-time RAN controller comprises vendor independent application programming interfaces (APIs).

In accordance with yet another embodiment of the present disclosure, the method includes the step of providing one or more antenna configuration parameters to the plurality of hardware devices without requiring a physical audit of the RU integrated antenna.

According to the fourth aspect of the disclosure, the sensor module comprises at least one of: a NETCONF based sensor monitoring module, an alarm system mapped to a watchdog manager, a sensor measurement interval mapped to the common YANG database, an O-RAN compliant sensor management information base (MIB).

In accordance with yet another aspect, the method integrates the antenna system (or antenna) with a radio unit (RU) having plurality of sensors and measures accurate antenna configuration parameters remotely.

Another embodiment of the present disclosure relates to a radio unit for providing remote sensing of a one or more antenna configuration parameters. In particular, one or more antenna configuration parameters comprising one or more sensor data values corresponding to an antenna, in a wireless communication system. Moreover, the wireless communication system comprising a radio access network (RAN). Further, the RAN comprises the radio unit positioned on the antenna.

According to the fifth aspect of the disclosure, the radio unit includes a sensor module, a programmable interface and a transmission unit. In particular, sensor module further includes a plurality of sensors configured to receive one or more antenna configuration parameters. Moreover, the programmable interface is configured to map the received one or more antenna configuration parameters from the sensor module to a plurality of hardware devices. Furthermore, the transmission unit is configured to transmit the received one or more antenna configuration parameters from the sensor module to the plurality of hardware devices .

According to the sixth aspect of the disclosure, the plurality of hardware devices corresponds to different vendors. Particularly, the plurality of hardware devices includes at least one of: remote management system (RMS), network management system (NMS), operations support system (OSS) and distributed unit (DU).

According to the seventh aspect of the disclosure, the radio unit includes a mapping unit in the programmable interface. In particular, the mapping unit is configured to map one or more antenna configuration parameters with a plurality of management information bases corresponding to the plurality of hardware devices .

According to the eighth aspect of the disclosure, the radio unit further includes a monitoring unit. In particular, the monitoring unit is configured to monitor the received one or more antenna configuration parameters from the sensor module by the plurality of hardware devices in a predetermined time interval.

In accordance with an embodiment of the present disclosure, the radio unit is positioned on a back panel of the antenna.

According to the ninth aspect of the disclosure, the radio unit further includes a transmission unit. In particular, the transmission unit is configured to transmit one or more antenna configuration parameters to the plurality of hardware devices continuously in real-time. In particular, the transmission unit transmits one or more antenna configuration parameters to the plurality of hardware devices after every first time interval. Moreover, the transmission unit transmits one or more antenna configuration parameters to the plurality of hardware devices without requiring a physical audit of the RU integrated antenna.

According to the tenth aspect of the disclosure, the radio unit further includes a storage unit configured to store one or more antenna configuration parameters in a YANG data module within the programmable interface. Particularly, the programmable interface is compliant to an open radio access network (O-RAN) architecture system. Moreover, the O-RAN architecture system includes a non-real-time RAN controller, a near-real-time RAN controller, a plurality of components, the plurality of components is at least one of: disaggregated, reprogrammable and vendor independent, the near-real-time RAN controller comprises vendor independent application programming interfaces (APIs).

In accordance with an embodiment of the present disclosure, the sensor module includes at least one of: a NETCONF based sensor monitoring module, an alarm system mapped to a watchdog manager, a sensor measurement interval mapped to the common YANG database, an O-RAN compliant sensor management information base (MIB).

According to an aspect of the disclosure, the open-radio access network (O-RAN) compliant interface design, i.e., a programmable (open) interface and transmit sensor data from the radio unit to multiple vendor independent hardware devices using the interface.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

According to the foregoing solutions, an apparatus and a method for remote sensing of antenna configuration parameters thereof is provided.

**BRIEF DESCRIPTION OF DRAWINGS**

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure. Having thus described the disclosure in general terms, reference will now be made to the accompanying figures, wherein:

Fig. 1A is a block diagram of an apparatus for remote sensing of a plurality of antenna configuration parameters in accordance with an embodiment of the present disclosure;

Fig. 1B is a block diagram illustrating elements of a sensor module of the apparatus in accordance with an embodiment of the present disclosure;

Fig. 1C is a block diagram illustrating elements of an interface of the apparatus in accordance with an embodiment of the present disclosure;

Fig. 2A is a block diagram of a radio unit (RU) of the apparatus in accordance with an embodiment of the present disclosure;

Fig. 2B is a high level block diagram illustrating placement of the sensor module in the radio unit (RU) in accordance with an embodiment of the present disclosure;

Fig. 3 is a flowchart illustrating a method for providing remote sensing of the plurality of antenna configuration parameters in accordance with an embodiment of the present disclosure;

Fig. 4 is a flow chart illustrating a method for providing remote sensing of the plurality of antenna configuration parameters in accordance with an embodiment of the present disclosure.

## REFERENCE LIST

Apparatus 100
Sensor Module 102
Interface 104
Yang Module 104a
Hardware Devices 106
Global Positioning System (GPS) Module 108
Compass 110
Accelerometer 112
Gyroscope 114
Inclinometer 116
Altimeter 118
Mapping Unit 120
Storage Unit 122
Transmission Unit 124
Monitoring Unit 126
Radio Unit (Ru) 202
Digital Processing Unit 204
Rf Processing Unit 206
Microcontroller 208
Timing Unit 210
Ethernet Interface 212

The method is illustrated in the accompanying drawings, throughout which like reference letters indicate corresponding parts in the various figures.

It should be noted that the accompanying figure is intended to present illustrations of exemplary embodiments of the present disclosure. This figure is not intended to limit the scope of the present disclosure. It should also be noted that the accompanying figure is not necessarily drawn to scale.

## DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only".

Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

**Following terms shall apply throughout the present disclosure:**

Open-Radio Access Network (O-RAN), is an evolved version of prior radio access networks, makes the prior radio access networks more open and smarter than previous generations.

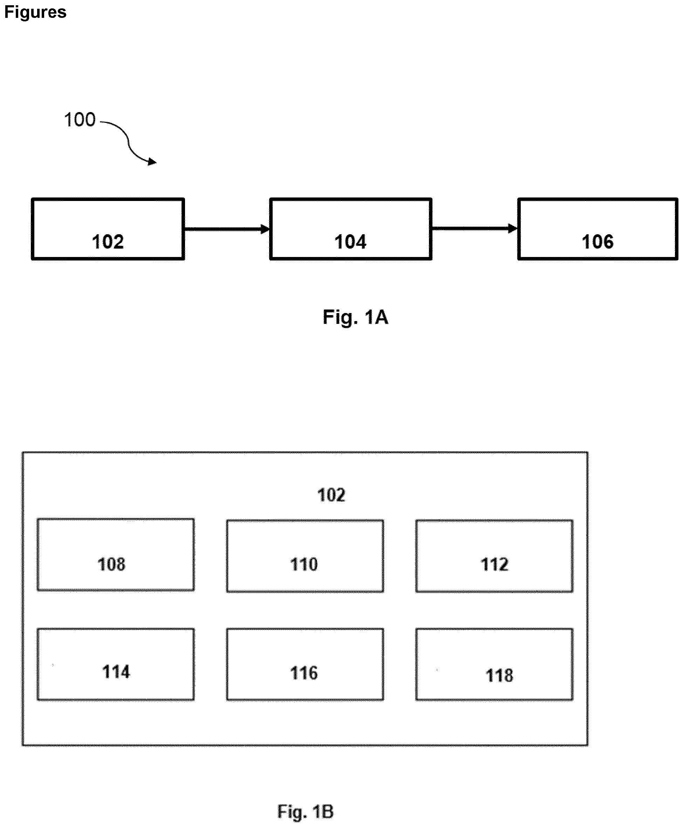

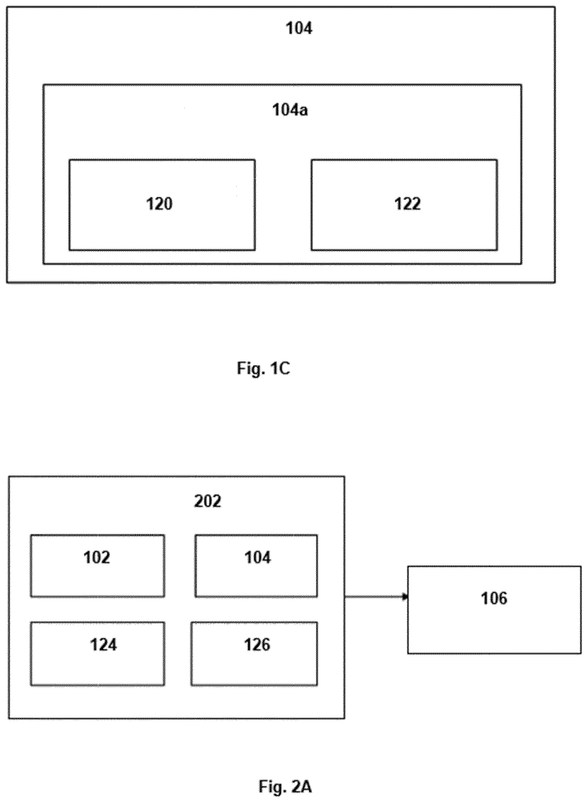

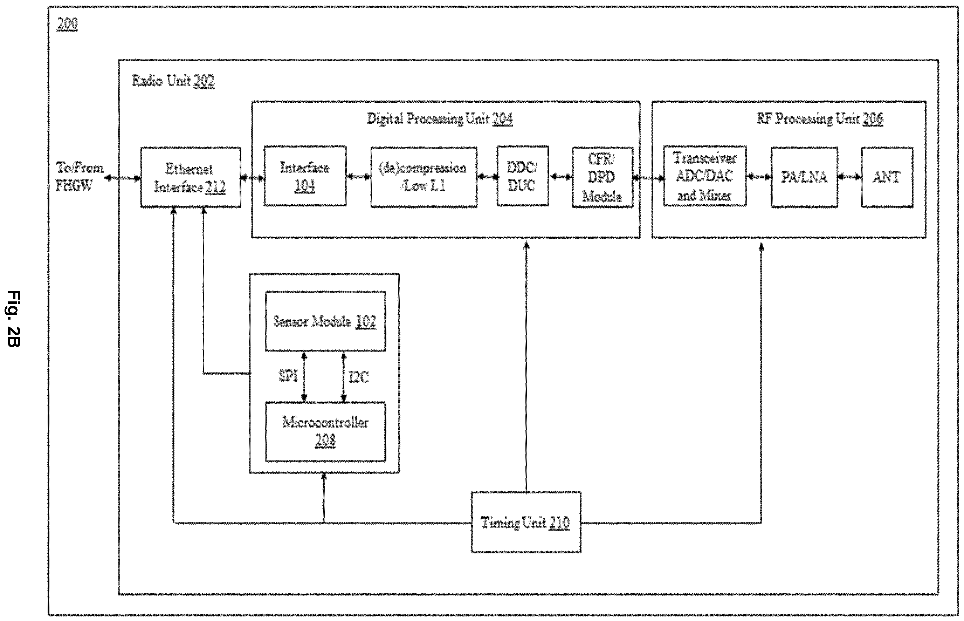

Fig. 1A is a block diagram of an apparatus for remote sensing of a plurality of antenna configuration parameters in accordance with an embodiment of the present disclosure. In particular, the apparatus (100) comprises a sensor module (102) communicating with a plurality of hardware devices (106) via an interface (104). Moreover, the sensor module (102), is placed in a radio unit (RU) (as illustrated in FIG. 2A and FIG. 2B). Furthermore, the sensor module (102) is integrated with an antenna system (or antenna). Subsequently, the antenna senses and/or captures the plurality of antenna configuration parameters/data such as, but not limited to, latitude, longitude, height, mechanical tilt, azimuth, location, angle of the antenna or antenna system. Further, the sensor module (102) transmits captured sensor data, as per antenna alignment (direction and angle of the antenna to its axis), to the plurality of hardware devices (106) by means of the RU.

In general, the RU handles digital front end (DFE) and parts of physical layer (PHY) and digital beamforming functionality. And, the radio unit enables remote sensing of the plurality of antenna configuration parameters.

In accordance with an embodiment of the present disclosure, the plurality of hardware devices (106) may be vendor independent and operator independent hardware devices (106). In particular, the plurality of hardware devices (106) may include at least one of a Remote Management System (RMS), a Network Management System (NMS), an Element Management System (EMS)/operations support system (OSS) and a distributed unit (DU).

In accordance with an embodiment of the present disclosure, the EMS may manage specific types of one or more network elements within a telecommunication management network (TMN). In particular, the EMS within a network element may manage functions and capabilities, and not necessarily traffic. Moreover, the EMS may communicate upward to higher-level systems of network management (NMS), in order to manage the traffic between itself and other network elements.

In accordance with an embodiment of the present disclosure, the RMS is a remote monitoring and management system which may remotely monitor the radio units or networking devices. Particularly, the RMS may monitor, manage and control the remote radio units and networking devices.

In accordance with an embodiment of the present disclosure, the network management system may be an application aimed to analyze, control and manage network and service infrastructure in order to ensure its configuration correctness, robustness, performance quality and security.

In accordance with an embodiment of the present disclosure, the operations support system (OSS) may be a software component that enables a service provider to monitor, control, analyze, and manage the services on its network. Furthermore, the distributed unit may sit close to the RU and may be a logical node that includes a subset of eNB/gNB functions.

In a 5G radio access network (RAN) architecture, a baseband unit functionality may split into two functional units, i.e., the DU, responsible for real time L1 and L2 scheduling functions, and a centralized unit (CU) responsible for non-real time, higher L2 and L3. In a 5G cloud RAN, the DU's server and relevant software may be hosted on a site itself or may be hosted in an edge cloud (data center or central office) depending on transport availability and fronthaul interface.

The detailed working of the sensor module (102), the interface (104) and the RU is explained in conjunction with FIG. 1B, FIG. 1C, FIG. 2A and FIG. 2B.

Fig. 1B is a block diagram illustrating elements of a sensor module (102) of the apparatus in accordance with an embodiment of the present disclosure. In particular, the sensor module (102) includes a plurality of sensors to capture the plurality of antenna configuration parameters. Moreover, the plurality of sensors may be, but not limited to, a global positioning system (GPS) module (108), a compass (110), an accelerometer (112), a gyroscope (114), an inclinometer (116) and an altimeter (118).

In accordance with an embodiment of the present disclosure, the GPS module (108) measures location parameters, the compass (110) is used for capturing azimuth/orientation parameters, the accelerometer (112) is used for capturing vibration parameters, the gyroscope (114) captures yaw measurement, the inclinometer (116) measures tilt parameters and the altimeter (118) senses parameters related to height of the antenna system.

In accordance with an embodiment of the present disclosure, the GPS module (108) obtains location parameters of the antenna system.

In an exemplary example, for a site, if there are three antennas placed within 5m from each other, an approximate location can be taken common for all the three antennas. If any one of the antennas is placed farther than 5m from the other antennas (for example: one antenna placed on a rooftop) then location for that antenna will be recorded exactly as per the GPS module (108).

Similarly, the azimuth will remain the same when the compass (110) is placed in the same orientation as the antenna (or antenna system) and the vibration and yaw parameters will remain same as the RU is attached at the back panel of the antenna.

In accordance with an embodiment of the present disclosure, the inclinometer (116) is based on the principle of acceleration due to gravity measurements and provides an angle through basic mathematical operations. Particularly, the tilt obtained from the inclinometer (116) is w.r.t. the standard x-axis. And, to determine the correct antenna tilt from the inclinometer (116), a correction term is introduced which considers an angle between a reference axis and a vertical axis and an angle between the RU and the antenna, if the RU is not attached exactly parallel to the antenna. The correction term will thus ensure that correct antenna angle is obtained at the end.

To determine the correct antenna angle, let actual tilt of the antenna be: $\theta$, the angle between the inclinometer (116) and the antenna as: $\delta°$ and the inclinometer (116) reading obtained be: $\alpha°$. Then, the actual tilt ($\theta$) will be ($\alpha° - \delta°$).

Further, the altimeter (118) provides reading based on the sea level or ground level. The actual height of the antenna or RU can be obtained by subtracting the altimeter reading from a ground level, i.e., Height w.r.t. ground = Altitude of Unit -Altitude of ground

In case of a rooftop antenna, the height of the building will also be taken into consideration. This option would be provided to the operator to enter the height of the building over which antenna is mounted. The actual antenna height will be derived according to the antenna height, height of the building, and placement of the RU. After considering the adjustments in a correction term:

$$\text{Height w.r.t. ground = Altitude of RU - Altitude of ground + correction term} \dots (1)$$

Considering height of antenna: $x$, considering the RU be placed approximately at the centre of the antenna, or considering the altimeter (118) be present at the centre of the antenna, considering height of altimeter be recorded as: h. Thus, to get a total height, $x/2$ will be added to height of the altimeter. Thus, the actual height = $h + x/2$. The $x/2$ can be replaced by other correction term if the RU is not present at the exact centre of the antenna.

Fig. 1C is a block diagram illustrating elements of an interface of the apparatus in accordance with an embodiment of the present disclosure. In particular, the interface (104) is an end point or gateway of the radio unit (202) that connects with external entities such as RMS/EMS/DU or any other hardware devices. Moreover, the interface (104) may be reprogrammable by using wired connectivity or over the air (wireless connectivity), thus may also be referred to as a programmable interface. Furthermore, the interface (104) is configured to map the received plurality of antenna configuration parameters, from the sensor module (102) to the plurality of hardware devices (106). Subsequently, the interface (104) is compliant to an open radio access network (O-RAN) architecture system such as O-RAN FH/1588.

In particular, the O-RAN provides real-time analytics that drive embedded machine learning systems and artificial intelligence back end modules to empower network intelligence. Moreover, the O-RAN includes virtualized network elements with open and standardized interfaces. Further, the open interfaces are essential to enable smaller vendors and operators to quickly introduce their own services or enable operators to customize the network to suit their own unique needs.

The open interfaces also enable multi-vendor deployments, more competitive and vibrant supplier ecosystems. Similarly, open source software and hardware reference designs enable faster, more democratic and permission less innovation. Further, the O-RAN introduces a self-driving network by utilizing new learning based technologies to automate operational network functions. These learning based technologies make the O-RAN intelligent. Embedded intelligence, applied at both component and network levels, enables dynamic local radio resource allocation, and optimizes network wide efficiency. In combination with O-RAN's open interfaces, AI-optimized closed-loop automation is a new era for network operations.

In accordance with an embodiment of the present disclosure, the O-RAN architecture system includes a non-real-time RAN controller, a near-real-time RAN controller, a plurality of components. In particular, the plurality of components is at least one of a disaggregated, reprogrammable and vendor independent. Further, the near real-time RAN controller comprises vendor independent application programming interfaces (APIs).

In accordance with an embodiment of the present disclosure, the interface (104) may use a Yet Another Next Generation (YANG) module (104a). The YANG module (104a) utilizes Yet Another Next Generation data modelling language to model and manage the captured data from the sensor module (102). In particular, the YANG language is used for definition of data sent over network management protocols such as NETCONF and RESTCONF. NETCONF/YANG may provide a standardized way to programmatically update and modify the configuration of the plurality of hardware devices (or network devices). Further, the YANG module describes configuration changes and the NETCONF may be a protocol that applies changes to a relevant datastore (such as running, saved etc..) upon the plurality of hardware devices. The YANG module (104a) for hardware management may include a mapping unit (120) to map to different management information base (MIBs) such as RFC (Request for comments) 3433 that can be used to manage the plurality of hardware devices. A Management Information Base (MIB) may be a hierarchical virtual database of network (or other entity) objects describing a device being monitored by the Network Management System (NMS). The MIB is used by Simple Network Management Protocol (SNMP) and Remote Monitoring 1 (RMON1). Here, the MIB for each hardware device may have mapping with the plurality of antenna configuration parameters (sensor data) using the O-RAN compliant programmable interface.

The RFC 3433 protocol, in the O-RAN WG4 M-Plane document, is used for management information base. The captured data is updated in a database or a storage unit (122) associated with the YANG module (104a) using the RFC 3433 MIB ["entPhysicalClass", "entPhysicalEntry" and "entPhysicalTable"].

In accordance with an embodiment of the present disclosure, the mapping unit (120) in the (programmable) interface is configured to map the plurality of antenna configuration parameters with a plurality of management information bases corresponding to the plurality of hardware devices (106), and the storage unit (122) is configured to store the plurality of antenna configuration parameters in the YANG module (104a) within the interface. The YANG module (104a) is a common data model for the sensor module (102) and the plurality of hardware devices (106) and may also be referred to as a YANG data module (104a).

In accordance with an embodiment of the present disclosure, the plurality of hardware devices (106), for example, the EMS/OSS, which is a part of the NMS retrieves all required data form the YANG module (104a) using allocated interfaces. Typically, the NMS manages a complete network i.e., it covers all the functions of EMS and manages different types of network elements/technologies of a same operator/vendor. Similarly, the OSS can manage multiple operators/vendors and is needed in addition to vendor specific NMS. Further, the plurality of hardware devices (106) may also include the NMS/DU (distributed unit).

Unlike conventional systems, the present disclosure provides a way to gather information i.e., the plurality of antenna configuration parameters about the antenna from the RU instead of placing sensors on the antenna itself. On the NMS side, the present solution receives the captured data i.e., the plurality of antenna configuration parameters at certain intervals and allows the operators (or vendors) flexibility in deciding so. The data received from the sensors can be: (a) saved in repository and updated at a certain time interval, e.g. , but not limited to, once every 24 hours, where the timing interval may be configurable by the operators and can range from 15s to 24hrs. Once logged into the RU, the captured data can be accessed; (b) the data can also be requested by the operators via polling as per the requirement. Further, the parameters like information periodicity and thresholds can be defined/modified by using some pre-defined group objects under the RFC 3433. For example, "entPhySensorUnitDisplay", "entPhySensorValueUpdateRate" etc. The RFC 3433 provides more options to operators. The operators will have the flexibility to manipulate the thresholds as per their deployment scenarios. Interfacing of the sensor module (102) in this framework using the RFC 3433 allows the operators to effectively and easily procure and analyse the sensor data.

Fig. 2A is a block diagram of a radio unit (RU) of the apparatus in accordance with an embodiment of the present disclosure. In particular, the radio unit (202) provides remote sensing of the plurality of antenna configuration parameters including one or more sensor data values corresponding to the antenna in a wireless communication system. Particularly, the wireless communication system may consist of various network components connected via wireless networks. The wireless networks may comprise any wireless connectivity technology such as radio links, millimeter wave, etc. The wireless communication system may include one or more controllers connected with radio access networks, which are further connected with a plurality of user equipment.

In accordance with an embodiment of the present disclosure, the wireless communication system may include a radio access network (RAN). In particular, the radio access network (RAN) may be a part of a telecommunications system which may connect individual devices to other parts of a network through radio connections. The RAN may provide a connection of user equipment such as mobile phone or computer with a core network of the telecommunication systems. The RAN may be an essential part of the access layer in the telecommunication systems that utilizes base stations (such as e node B, g node B) for establishing radio connections. The RAN includes the radio unit (202) that is positioned on the antenna. The RU may be a remote radio unit (RRU). The RRU may be a radio frequency (RF) circuitry of a base station enclosed in a small outdoor module. The RRU may perform all RF functionality like transmit and receive functions, filtering, and amplification. It may contain analog-to-digital or digital-to-analog converters and up/down converters as explained in conjunction with FIG. 2B. The RRU may also provide advanced monitoring and control features that allow operators to optimize performance from a remote, centralized location. The RRU is usually mounted near the antenna to reduce transmission line losses and is connected to the main, digital portion of the base station (BBU) with an optical fiber.

In accordance with an embodiment of the present disclosure, the radio unit (202) includes the sensor module (102), the interface (104), a transmission unit (124) and a monitoring unit (126).

In accordance with an embodiment of the present disclosure, the sensor module (102) comprises the plurality of sensors configured to receive the plurality of antenna configuration parameters and the interface (104) is configured to map the received plurality of antenna configuration parameters from the sensor module (102) to the plurality of hardware devices (106) as explained earlier. In particular, the plurality of hardware devices (106) may correspond to different vendors. Moreover, the sensor module may include at least one of a NETCONF based sensor monitoring module, an alarm system mapped to a watchdog manager (i.e., watchdog manager mapped alarm system), a sensor measurement interval mapped to a common YANG database, an O-RAN compliant sensor management information base (MIB).

Alternatively, the NETCONF based sensor monitoring module, the alarm system mapped to the watchdog manager, the sensor measurement interval mapped to the common YANG database, the O-RAN compliant sensor management information base (MIB) may be included in the interface (104) instead of the sensor module (102).

In accordance with an embodiment of the present disclosure, the transmission unit (124) is configured to transmit the received plurality of antenna configuration parameters from the sensor module (102) to the plurality of hardware devices (106). In particular, the transmission unit (124) may transmit the plurality of antenna configuration parameters to the plurality of hardware devices (106) continuously in real-time. Further, the transmission unit (124) is configured to transmit the plurality of antenna configuration parameters to the plurality of hardware devices (106) after every first time interval, for e.g., but not limited to, once every 24 hours, where the timing interval may be configurable by the operators and can range from 15s to 24hrs. Subsequently, the transmission unit enables transmission of the plurality of antenna configuration parameters to the plurality of hardware devices (106) without requiring a physical audit of the RRU integrated antenna. The monitoring unit (126) monitors the received plurality of antenna configuration parameters from the sensor module by the plurality of hardware devices (106) at a predetermined time interval (i.e., regular interval), for example, every hour, every two hours etc.

Conclusively, transmission of the plurality of antenna configuration parameters from the sensor module (102) to the plurality of hardware devices (106) may require the plurality of antenna configuration parameters to be mapped onto the plurality of hardware devices (106) via the interface (104). The interface (104), which is O-RAN compliant, may map the sensor information onto the plurality of hardware devices, corresponding to same or multiple vendors, by mapping the plurality of antenna configuration parameters to the plurality of management information bases of the plurality of hardware devices.

Fig. 2B is a high level block diagram illustrating placement of the sensor module in the radio unit (RU) in accordance with an embodiment of the present disclosure. Particularly, the RU is a distributed and integrated frequency unit that facilitates wireless communication, user equipment and a network. The user equipment may be but not limited to a mobile phone, WLL phone or the like and the network may be 4G, 5G, LTE, GSM, CDMA, Wireless local loop, WAN or the like. Moreover, the RU is integrated with the antenna system and is connected to a back panel of the antenna system. Further, the RU (202) includes the sensor module (102), a digital processing unit (204), a radio frequency (RF) processing unit (206), a microcontroller (208), a timing unit (210) and an ethernet interface (212).

In accordance with an embodiment of the present disclosure, the RU (202) sends/receives signal to/from a fronthaul gateway via the ethernet interface (212). The digital processing unit (204), comprises various elements such as the interface (104) as O-RAN FH/1588, (de)compression/Low L1, DDC/DUC (digital down converter/digital up converter), and CFR/DPD (crest factor reduction/digital pre-distortion) module, processes the signal received from the fronthaul gateway. Herein, the interface (104) is an O-RAN compliant interface design such as O-RAN FH/1588 in the RU (202) includes NETCONF based sensor monitoring and watchdog manager mapped alarm system, sensor measurement interval aligned with/mapped to the YANG module (104a), sensor management information base (MIB) as per the O-RAN interface. Further, the digital processing unit (204) may perform compression-decompression, conversion or the like of the signal.

In accordance with an embodiment of the present disclosure, the digitally processed signal from the digital processing unit (204) is fed to the RF processing unit (206). In particular, the RF processing unit (206) comprises various elements such as transceiver, ADC/DAC (analog to digital converter/digital to analog converter), mixer, PA/LNA (power amplifier/low noise amplifier) and ANT (wireless radio networking protocol). Moreover, the RF processing unit (206) processes the signal from the digital processing unit (204) and transmits back to the digital processing unit (204). Specifically, the RF processing unit (206) may convert and amplify the signal. Further, the RF processing unit (206) implements a wireless communications protocol stack ANT that enables hardware operating in 2.4 GHz ISM (industrial, scientific and medical) band to communicate by establishing standard rules for co-existence, data representation, signaling, authentication, and error detection.

In accordance with an embodiment of the present disclosure, the sensor module (102) integrated with the RU (202) has a matching surface to the antenna. That is, the data captured from the sensor module (102) in the RU (202) matches antenna alignment information, thereby providing accurate antenna configuration parameters. The antenna alignment information is required for configuring the antenna. Particularly, the sensor module (102) captures data via the plurality of sensors as explained in FIG. 1B that is further received by the microcontroller (208). And, the sensor data may be received at regular intervals as per the operator's requirement. Moreover, the sensor module (102) is connected to [or interfaced with] the microcontroller (208) via an SPI (Serial Peripheral Interface) and an I2C (Inter-Integrated Circuit).

The SPI is a synchronous serial communication interface specification used for short-distance communication and the I2C is a serial communication protocol, where data is transferred bit by bit along a single wire (such as SDA (serial data) line). The GPS module (108) gives output in standard NMEA (National Marine Electronics Association) string format. It provides output serially on a Tx pin with default 9600 Baud rate. Apart from data pins, it requires VCC (Voltage Common Collector) and GND (Ground).

In accordance with an embodiment of the present disclosure, the compass (110) (such as magnetometer) and the accelerometer (112) are interfaced with the microcontroller (208), where the main pin interfaces are for power supply, serial data (SDA) line and serial clock (SCL) pin which are part of the I2C interface. Furthermore, the gyroscope (114) may be interfaced with the microcontroller (208) via the I2C and the inclinometer (116) may be interfaced with the microcontroller (208) via the SPI and may contain power supply pins as well. Similarly, the altimeter (118) is also interfaced with the microcontroller (208) via the I2C. The altimeter (118) includes a pin through which a supply voltage is to be provided, the SDA pin/line to obtain output, the SCL pin for clock, and INT1 and INT2 for interrupts, if any.

In accordance with an embodiment of the present disclosure, the timing unit (210) may generate timing signals to control the functions of all the elements of the RU (202). The timing signals are transmitted to the digital processing unit (204), the RF processing unit (206), the sensor module-microcontroller and the ethernet interface (212) to control their functions. All the processed data/signal by the RU (202) is transmitted to the fronthaul gateway via the ethernet interface (212).

Advantageously, the antenna integrated with the RRU does not require the RRU to be active, which is power intensive. Hence, the antenna integrated with the RRU may work in passive mode and save a lot of energy while transmitting the plurality of antenna configuration parameters from remote sites to the plurality of hardware devices. Further, the interface may be reprogrammed based on the user requirements and can transmit the plurality of antenna configuration parameters (i.e., sensor information) from remote sites to RMS/EMS/NMS/hardware devices. If the interface is not programmable and O-RAN compliant, it can transmit information to proprietary hardware devices only. Here, the interface is capable of mapping information to multiple vendor independent hardware devices/RMS. Further, the apparatus operates its functions in real-time by capturing any change in the plurality of antenna configuration parameters in real-time and provides traffic monitoring and optimization at the remote site (antenna site).

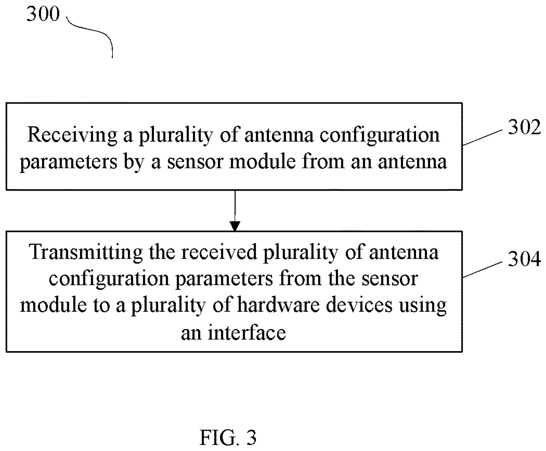

Fig. 3 is a flowchart illustrating a method for providing remote sensing of the plurality of antenna configuration parameters in accordance with an embodiment of the present disclosure. In particular, the plurality of antenna configuration parameters includes one or more sensor data values corresponding to the antenna. Moreover, the method uses a single box integrated sensor system (i.e., a sensor module) in a radio unit (RU) that is installed at a back panel of an antenna. The method starts at step 302.

At step 302, the plurality of antenna configuration parameters is received by the sensor module (102) from the antenna. In particular, the sensor module comprises the plurality of sensors and is the part of the RU or the remote radio unit (RRU) integrated with the antenna.

At step 304, the received plurality of antenna configuration parameters from the sensor module (102) are transmitted to the plurality of hardware devices (106) using the interface (104) on the radio unit (202). Particularly, the interface (104) is programmable and the transmission of the received plurality of antenna configuration parameters occurs periodically at every first time interval.

The method comprises steps of receiving one or more antenna configuration parameters by a sensor module from the antenna, the sensor module comprises a plurality of sensors and is a part of a radio unit (RU), the RU is integrated with the antenna; and transmitting the received one or more antenna configuration parameters from the sensor module to a plurality of hardware devices using a programmable interface on the radio unit.

In accordance with an embodiment of the present disclosure, the sensor module includes a plurality of sensors such as, but not limited to, a global positioning system (GPS) module, a compass, an accelerometer, a gyroscope, an inclinometer and an altimeter. The GPS module measures location parameters, the compass is used for capturing azimuth/orientation parameters, the accelerometer is used for capturing vibration parameters, the gyroscope captures yaw measurement, the inclinometer measures tilt parameters and the altimeter senses parameters related to height of the antenna system. The sensor module has a matching interface with the antenna and captures data using above-mentioned different sensors for accurate antenna configuration.

In accordance with an embodiment of the present disclosure, the plurality of hardware devices further includes at least one of: remote management system (RMS), network management system (NMS), operations support system (OSS) and distributed unit (DU).

In accordance with an embodiment of the present disclosure, the plurality of hardware devices corresponds to different vendors.

In accordance with an embodiment of the present disclosure, the method further includes mapping of one or more antenna configuration parameters with a plurality of management information bases corresponding to the plurality of hardware devices.

In accordance with another embodiment of the present disclosure, the method includes monitoring the received one or more antenna configuration parameters from the sensor module by the plurality of hardware devices in a predetermined time interval.

The method includes using an O-RAN compliant interface design in the RU for accurate remote sensing of the antenna, further transmits sensor data to an EMS/OSS (Element Management System/Operations Support System). Advantageously, providing a way to gather information about the antenna from the RU instead of placing sensors directly on the antenna.

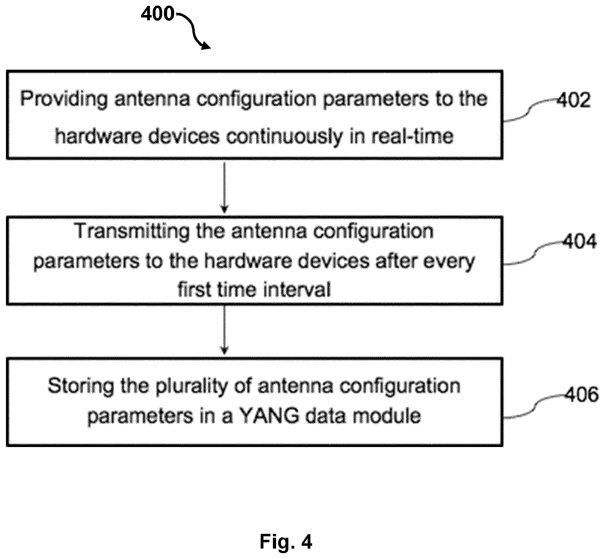

Fig. 4 is a flow chart illustrating a method for providing remote sensing of the plurality of antenna configuration parameters in accordance with an embodiment of the present disclosure.

At step 402, the plurality of antenna configuration parameters is provided to the plurality of hardware devices (106) continuously in real-time.

At step 404, the plurality of antenna configuration parameters is transmitted to the plurality of hardware devices (106) after every first time interval.

At step 406, the plurality of antenna configuration parameters is stored in a YANG data module (104a) within the programmable interface (104).

It may be noted that the method 300 and 400 is explained to have above stated process steps, however, those skilled in the art would appreciate that the flowchart 900 may have more/less number of process steps which may enable all the above stated embodiments of the present disclosure.

The present disclosure provides advantages over the conventional mechanisms such as the remote sensing saves time, eases capturing data and helps in monitoring the antenna system. Moreover, any change in the antenna and the RU on field is notified immediately which generally takes weeks to identify. Further, predictive analysis becomes feasible to predict failures happening due to external factors. The solution is beneficial for the antenna integrated RU with an O-RAN compliant ecosystem which is totally a disaggregated network, where the RU and the DU are positioned at different locations. Furthermore, data is collected automatically with no manual intervention, thus is authentic with negligible error rate as there is no manual entry needed.

The present solution also provides huge reduction in cost as field audit data will be populated as soon as the site is on-air. Further, it gives a huge support to a Network Optimization team for traffic and drop optimization on site.

The embodiments disclosed herein can be implemented using at least one software program running on at least one hardware device and performing network management functions to control the elements.

The various action-s, acts, blocks, steps, or the like in the flow diagram may be performed in the order presented, in a different order or simultaneously. Further, in some embodiments, some of the actions, acts, blocks, steps, or the like may be omitted, added, modified, skipped, or the like without departing from the scope of the disclosure.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

It will be apparent to those skilled in the art that other embodiments of the disclosure will be apparent to those skilled in the art from consideration of the specification and practice of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above described embodiment, method, and examples, but by all embodiments and methods within the scope of the disclosure. It is intended that the specification and examples be considered as exemplary, with the true scope of the disclosure being indicated by the claims.

It is to be understood that the terms so used are interchangeable under appropriate circumstances and embodiments of the disclosure are capable of operating according to the present disclosure in other sequences, or in orientations different from the one(s) described or illustrated above.

**Claims**

**1.** A method for providing remote sensing of a plurality of antenna configuration parameters, **characterized by** following steps:

receiving the plurality of antenna configuration parameters by a sensor module (102) from the antenna, and the sensor module (102) comprises a plurality of sensors and is a part of a radio unit (RU) (202), the RU is integrated with the antenna; and

transmitting the received plurality of antenna configuration parameters from the sensor module (102) to a plurality of hardware devices (106) using a programmable interface (104) on the radio unit;

wherein the plurality of antenna configuration parameters comprising one or more sensor data values corresponding to an antenna.

2. The method as claimed in claim 1, wherein the method further comprising:

mapping of the plurality of antenna configuration parameters with a plurality of management information bases corresponding to the plurality of hardware devices (106); and

monitoring the received plurality of antenna configuration parameters from the sensor module (102) by the plurality of hardware devices (106) in a predetermined time interval;

wherein the plurality of hardware devices (106) corresponds to different vendors and the plurality of hardware devices (106) includes at least one of: remote management system (RMS), network management system (NMS), operations support system (OSS) and distributed unit (DU).

3. The method as claimed in claim 1 or claim 2, wherein the method further comprising:

providing the plurality of antenna configuration parameters to the plurality of hardware devices (106) continuously in real-time;

transmitting the plurality of antenna configuration parameters to the plurality of hardware devices (106) after every first time interval; and

storing the plurality of antenna configuration parameters in a YANG data module (104a) within the programmable interface (104).

4. The method as claimed in any preceding claim, wherein the programmable interface (104) is compliant to an open radio access network (O-RAN) architecture system, wherein the O-RAN architecture system includes a non-real-time RAN controller, a near-real-time RAN controller, a plurality of components, wherein the plurality of components is at least one of: disaggregated, reprogrammable and vendor independent, wherein the near-real-time RAN controller comprises vendor independent application programming interfaces (APIs).

5. The method as claimed in any preceding claim, wherein the method further comprises:
providing the plurality of antenna configuration parameters to the plurality of hardware devices (106) without requiring a physical audit of the RU integrated antenna.

6. The method as claimed in any preceding claim, wherein the sensor module (102) comprises at least one of a NETCONF based sensor monitoring module, an alarm system mapped to a watchdog manager, a sensor measurement interval mapped to the common YANG database, an O-RAN compliant sensor management information base (MIB).

7. The method as claimed in any preceding claim, wherein method comprises positioning the radio unit on a back panel of the antenna.

8. A radio unit (202) for providing remote sensing of a plurality of antenna configuration parameters in a radio access network (RAN), the RAN comprising the radio unit (202), **characterized by**:

a sensor module (102) comprising a plurality of sensors configured to receive the plurality of antenna configuration parameters;

a programmable interface (104) configured to map the received plurality of antenna configuration parameters from the sensor module (102) to a plurality of hardware devices (106); and

a transmission unit (124) configured to transmit the received plurality of antenna configuration parameters from the sensor module (102) to the plurality of hardware devices (106);

wherein the plurality of antenna configuration parameters comprising one or more sensor data values corresponding to an antenna and the radio unit is positioned on a back panel of the antenna.

9. The radio unit (202) as claimed in claim 8, wherein the radio unit further comprises:

a mapping unit (120) in the programmable interface (104) configured to map the plurality of antenna configuration parameters with a plurality of management information bases corresponding to the plurality of hardware devices (106);
a monitoring unit (126) configured to monitor the received plurality of antenna configuration parameters from the sensor module (102) by the plurality of hardware devices (106) in a predetermined time interval; and
a storage unit (122) configured to store the plurality of antenna configuration parameters in a YANG data module (104a) within the programmable interface (104).

10. The radio unit (202) as claimed in claim 8 or claim 9, wherein the plurality of hardware devices (106) corresponds to different vendors and the plurality of hardware devices (106) includes at least one of: remote management system (RMS), network management system (NMS), operations support system (OSS) and distributed unit (DU).

11. The radio unit (202) as claimed in any of claims 8 to 10, wherein the transmission unit (124) is configured to transmit the plurality of antenna configuration parameters to the plurality of hardware devices (106) continuously in real-time.

12. The radio unit (202) as claimed in any of claims 8 to 11, wherein the transmission unit (124) is configured to transmit the plurality of antenna configuration parameters to the plurality of hardware devices (106) after every first time interval.

13. The radio unit (202) as claimed in any of claims 8 to 12, wherein the transmission unit (124) is configured to transmit the plurality of antenna configuration parameters to the plurality of hardware devices (106) without requiring a physical audit of the RU integrated antenna.

14. The radio unit (202) as claimed in any of claims 8 to 13, wherein the programmable interface (104) is compliant to an open radio access network (O-RAN) architecture system, wherein the O-RAN architecture system includes a non-real-time RAN controller, a near-real-time RAN controller, a plurality of components, wherein the plurality of components is at least one of: disaggregated, reprogrammable and vendor independent, wherein the near-real-time RAN controller comprises vendor independent application programming interfaces (APIs).

15. The radio unit (202) as claimed in any of claims 8 to 14, wherein the sensor module (102) comprises at least one of: a NETCONF based sensor monitoring module, an alarm system mapped to a watchdog manager, a sensor measurement interval mapped to the common YANG database, an O-RAN compliant sensor management information base (MIB).

**Figures**

100

| | | | |
|---|---|---|---|
| 102 | → | 104 | → | 106 |

Fig. 1A

102

| | | |
|---|---|---|
| 108 | 110 | 112 |
| 114 | 116 | 118 |

Fig. 1B

Fig. 1C

Fig. 2A

**Fig. 2B**

300

| Receiving a plurality of antenna configuration parameters by a sensor module from an antenna | 302 |

| Transmitting the received plurality of antenna configuration parameters from the sensor module to a plurality of hardware devices using an interface | 304 |

FIG. 3

400

| Providing antenna configuration parameters to the hardware devices continuously in real-time | 402 |

| Transmitting the antenna configuration parameters to the hardware devices after every first time interval | 404 |

| Storing the plurality of antenna configuration parameters in a YANG data module | 406 |

**Fig. 4**

# EP 4 027 686 A1

Europäisches
Patentamt

European
Patent Office

Office européen
des brevets

## EUROPEAN SEARCH REPORT

Application Number

EP 21 19 9744

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 784 533 B1 (HUAWEI TECH CO LTD [CN]) 30 December 2020 (2020-12-30) | 1,5,7,8 | INV. H04W24/02 |
| Y | * paragraphs [0035], [0059], [0060], [0064], [0066], [0075], [0076]; figure 3 * | 2-4,6, 9-15 | ADD. H01Q3/00 |
| | ----- | | |
| X | CN 111 142 130 A (XI'AN AEROSPACE HUAXUN TECH CO LTD) 12 May 2020 (2020-05-12) | 1,5,7,8 | |
| Y | * paragraphs [0002] - [0018], [0050] * | 2-4,6, 9-15 | |
| | ----- | | |
| Y | LEONARDO BONATI ET AL: "Open, Programmable, and Virtualized 5G Networks: State-of-the-Art and the Road Ahead", ARXIV.ORG, CORNELL UNIVERSITY LIBRARY, 201 OLIN LIBRARY CORNELL UNIVERSITY ITHACA, NY 14853, 25 August 2020 (2020-08-25), XP081747547, * page 12, left-hand column, paragraph 3 - page 12, right-hand column, paragraph 2 * | 2-4,6, 9-15 | |
| | ----- | | TECHNICAL FIELDS SEARCHED (IPC) |
| A | ALTRAN INNOVACION S L: "OSM MR #9 - 5G O-RAN & OSM", ETSI DRAFT; OSM(20)000088, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. ISG OSM OpenSource MANO 8 September 2020 (2020-09-08), pages 1-16, XP014376299, Retrieved from the Internet: URL:docbox.etsi.org/OSG/OSM/05-CONTRIBUTIO NS/2020/OSM(20)000088_OSM_MR__9____5G_O-RAN ____OSM.pptx [retrieved on 2020-09-08] * pages 11-12 * | 3,9, 11-13 | H04W H01Q |
| | ----- | | |

The present search report has been drawn up for all claims

| Place of search | Date of completion of the search | Examiner |
|---|---|---|
| Munich | 4 March 2022 | Rüschmann, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 9744

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2022

| Patent document cited in search report | | Publication date | Patent family member(s) | | Publication date |
|---|---|---|---|---|---|
| EP 2784533 | B1 | 30-12-2020 | AU | 2012343109 A1 | 19-06-2014 |
| | | | CN | 102509902 A | 20-06-2012 |
| | | | EP | 2784533 A1 | 01-10-2014 |
| | | | EP | 3862792 A1 | 11-08-2021 |
| | | | WO | 2013075520 A1 | 30-05-2013 |
| CN 111142130 | A | 12-05-2020 | NONE | | |

EPO FORM P0459

For more details about this annex : see Official Journal of the European Patent Office, No. 12/82

**EP 4 027 686 A1**

**Patent documents cited in the description**

- IN 202111000546
- CN 201629398 U
- WO 2016088126 A1
- CN 102820893 A